# EUROPÄISCHE PATENTSCHRIFT

(11) **EP 1 298 849 B1**
(45) Veröffentlichungstag und Bekanntmachung des Hinweises auf die Patenterteilung: **13.01.2010**
(21) Anmeldenummer: 02017113.8
(22) Anmeldetag: 30.07.2002
(51) Int. Cl.: H04L 12/40, H04J 3/06

(54) **Verfahren und Vorrichtung zur Übertragung von Informationen auf einem Bussystem und Bussystem**
Method and device for transmitting information via a bus system and bus system
Procédé et dispositif de transmission d'information via un système de bus et système de bus

(30) Priorität: 26.09.2001 DE 10147445
(43) Veröffentlichungstag der Anmeldung: 02.04.2003
(73) Patentinhaber: ROBERT BOSCH GMBH, 70442 Stuttgart (DE)
(72) Erfinder: Dalakuras, Lambros, 75217 Birkenfeld (DE); Boehm, Andreas, 73265 Dettingen/Teck (DE)

(56) Entgegenhaltungen:
- WO-A-01/50677
- WO-A-98/54872
- US-A- 5 289 466
- DECOTIGNIE J D ET AL: "PRODUCER-DISTRIBUTOR-CONSUMER MODEL ON CONTROLLER AREA NETWORK" PROCEEDINGS OF THE IFAC/IFIC WORKSHOP, REAL TIME PROGRAMMING, OXFORD, GB, 6. November 1995 (1995-11-06), Seiten 35-42, XP002074139
- R.GRIESSBACH, J.BERWAGNER, M. PELLER: "byteflight- neues Hochleistung-Datenbussystem für sicherheitrelevante Anwendungen" INTERNET ARTICLE, [Online] Januar 2000 (2000-01), Seiten 60-80, XP002356167 Gefunden im Internet: URL:http://www.byteflight.com/> [gefunden am 2005-11-28]

## Beschreibung

### Stand der Technik

Die Erfindung betrifft ein Verfahren und eine Vorrichtung zur Übertragung von Informationen auf einem Bussystem und ein Bussystem mit wenigstens zwei Teilnehmern, wobei genau ein übergeordneter Teilnehmer ein sogenannter Master und wenigstens ein untergeordneter Teilnehmer ein sogenannter Slave vorgesehen sind gemäß den unabhängigen Ansprüchen.

Aus der WO98/54872 ist bereits ein CAN Bus bekannt in welchen real-time Nachrichten und non-real-time Nachrichten übertragen werden können.

Die Vernetzung von Steuergeräten, Sensorik und Aktuatorik mit Hilfe eines Kommunikationssystems, also eines Bussystems, hat in den letzten Jahren beim Bau von modernen Kraftfahrzeugen oder auch im Maschinenbau, insbesondere im Werkzeugmaschinenbereich und in der Automatisierung drastisch zugenommen. Synergieeffekte durch Verteilung von Funktionen auf mehrere Steuergeräte oder andere Teilnehmer können dabei erzielt werden- Man spricht dabei von verteilten Systemen. Die Kommunikation zwischen verschiedenen Teilnehmern solcher verteilter Systeme findet mehr und mehr über einen Bus bzw. ein Bussystem statt. Der Kommunikationsverkehr auf dem Bussystem, Zugriffs- und Empfangsmechanismen sowie Fehlerbehandlungen werden über ein Protokoll geregelt.

Ein solches Bussystem mit entsprechendem Protokoll ist der LIN-Bus (Local Interconnect Network). Der LIN-Bus ist ein Master-Slave-Bus, dessen Teilnehmer über eine logische Busleitung verbunden sind. Jedem Bus gehören maximal ein Master und bis zu 64 Slaves an. Als Übertragungsmedium dient eine ungeschirmte physikalische Eindrahtleitung. Das LIN-Protokoll teilt den Sende- und Empfangsprozeß in zwei Tasks ein. Der Mastertask beinhaltet die Synchronisation und Adressierung und der Slavetask beinhaltet die Daten. Ein Master kann sowohl den Mastertask, als auch den Slavetask ausführen, während ein Slave nur den Slavetask ausführen kann. Durch spezielle Adressierung ist es möglich einen Slave-To-Slave Datenaustausch durchzuführen. Dabei besteht jeder Datentransfer aus einem Botschafts- oder Nachrichtenrahmen, in dem sowohl die Synchronisations- als auch die Dateninformationen übertragen werden. Die einzelnen Abschnitte der Botschaft, die sogenannten Bytefelder, sind gleich dem Format einer seriellen Schnittstelle bei 8N1-Übertragung, d. h. 8 Datenbits und 1 Stoppbit. Zu Beginn jedes Nachrichtenrahmens (MessageFrame) sendet der Master eine Synchronisationsinformation, das sogenannte SynchBreak, um die Slaves aus einem möglichen Ruhezustand zu holen und Synchronisation zu ermögliche. Nach dem SynchBreak folgt das SynchField. Dabei sendet der Master ein hexidezimales Muster, um den Slave mit Hilfe insbesondere fallender Flanken rezessiv nach dominant, die Synchronisation zu ermöglichen. Das darauffolgende Informationskennzeichen oder IdentierField (IdentField) gibt Auskunft über den Inhalt und die Länge der nachfolgenden Datenfelder (DataFields) und somit des Nachrichtenrahmens.

Solche Eindrahtbussysteme wie der LIN-Bus werden heute aus Kostengründen in Subbussystemen insbesondere im Kraftfahrzeug immer häufiger eingesetzt. Dabei basiert der Buszugriff beim LIN-Bus auf einem wie gesagt strikten Master-Slave-Verfahren. Die LIN-Slaves haben bei diesem Verfahren keine Möglichkeit dem Master ein lokales Ereignis zu signalisieren. So kommt es je nach Applikation und Datenaufkommen schon bei wenigen zeitkritischen Signalen aufgrund des zeitintensiven Pollings der Slaves, also des zeitintensiven Feststellens der Empfangs- bzw. Sendebereitschaft zu einer hohen Buslast.

So zeigt sich dass der Stand der Technik, insbesondere der LIN-Bus, nicht in jeder Hinsicht optimale Ergebnisse zu liefern vermag. Deshalb soll der bestehende LIN-Bus dahingehend erweitert werden, dass die untergeordneten Teilnehmer im Bussystem, also die Slaves, die Möglichkeit erhalten von sich aus Informationen zu übertragen.

### Vorteile der Erfindung

Dies wird durch ein Verfahren und eine Vorrichtung zur Übertragung von Informationen auf einem Bussystem und ein entsprechendes Bussystem mit wenigstens zwei Teilnehmern gelöst, wobei genau ein übergeordneter Teilnehmer ein sogenannter Master und wenigstens ein untergeordneter Teilnehmer ein sogenannter Slave vorgesehen sind, wobei die Informationen auf dem Bussystem in einem vorgegebenen, abgeschlossenen Nachrichtenrahmen übertragen werden, welcher neben den zu übertragenden Informationen auch Synchronisationsinformationen enthält, wie beispielsweise SynchBreak oder SynchField, wobei unterschiedlichen Informationen unterschiedliche Informationskennzeichen (IdentifierField) eindeutig zugeordnet sind und nach jedem abgeschlossenen Nachrichtenrahmen (MessageFrame) eine Anzahl von Informationsabschnitten (InformationSlots, IS) vorgesehen ist, in welchen der wenigstens eine untergeordnete Teilnehmer, also Slave, Informationen eintragen kann und das die Anzahl der Informations Abschnitte der Anzahl unterschiedlicher Informationskennzeichen entspricht.

In einer vorteilhaften Ausführungsform ist für die Informationsabschnitte eine Reihenfolge oder Priorität vorgegeben und es wird jedem Informationsabschnitt genau ein Informationskennzeichen zugeordnet. D. h. jedem InformationSlot (IS) ist genau ein IdentifierField (IdentField) zugeordnet. In diesem Fall können dann die InformationSlots auch als PriorityInformationSlots oder PrioritySlots bezeichnet werden.

Weiterhin von Vorteil ist, dass die Informationskennzeichen (IndentField) eindeutig den Teilnehmern insbesondere den Slaves, insbesondere über die durch die Slaves versandten Daten, zugeordnet sind, so dass mit jedem Informationskennzeichen exakt auf einen Slave rückgeschlossen werden kann.

In einer bevorzugten Ausgestaltung trägt der wenigstens eine untergeordnete Teilnehmer, also die Slaves, in einen einem solchen Informationskennzeichen oder IdentifierField des Slaves zugeordneten Informationsabschnitt (InformationSlot, PrioritySlot) eine Synchronisationsinformation des Bussystems ein, insbesondere einem SynchBreak, wodurch dann der übergeordnete Teilnehmer oder Master eine Übertragung eines Nachrichtenrahmens (MessageFrame) mit diesem die Synchronisationsinformation enthaltenen Informationsabschnitt initiiert.

In einer besonders vorteilhaften Ausgestaltung handelt es sich bei dem Bussystem um ein LIN-Bussystem, wobei der LIN-Master die durch den wenigstens einen Slave in wenigstens einem InformationSlot bzw. PrioritySlot als SynchBreak eingetragene Synchronisationsinformation durch SynchField, IdentField, entsprechende Datafields und ein ChecksumField zu einem vollständigen LIN-Nachrichtenrahmen (MessageFrame) ergänzt, wobei ebenfalls erneut nach dem abgeschlossenen LIN-MessageFrame eine Anzahl von Informationsabschnitten oder PrioritySlots bzw. InformationSlots vorgesehen ist.

Durch diese Erweiterung insbesondere der bestehenden LIN-Spezifikation ergibt sich eine deutliche Verringerung der Reaktionszeiten auf dem LIN-Bus.

Somit haben die Slaves oder untergeordneten Teilnehmer in einem Master-Slave-Bussystem die Möglichkeit lokale Ereignisse von sich aus zu signalisieren. Somit können dann die Slaves gezielt vom Master abgefragt werden und müssen nicht der Reihe nach gepollt werden. Dadurch werden vorteilhafterweise lokale Ereignisse an den Slaves schneller erkannt, wodurch die Bus-Performance in bestehenden Plattformentwicklungen z. B. einem DPM-Konzept (Distribution Power Module) oder bei Keyless entry erheblich verbessert werden kann.

Insbesondere auf dem LIN-Bus werden dadurch die Reaktionszeiten erheblich verkürzt und die zusätzliche Bandbreite eröffnet weiteren Applikationen die Kostenvorteile eines sehr einfach strukturierten Bussystems, wie beispielsweise eines LIN-Bussystems zu nutzen.

Die vorgeschlagene Erweiterung durch Einfügung von sogenannten InformationSlots oder PrioritySlots ist abwärts kompatibel zu bestehenden Busspezifikationen und kann darin eingesetzt werden. Speziell für LIN-Bussysteme ist diese Abwärtskompatibilität gegeben.

Wie bereits im Stand der Technik und den Vorteilen der Erfindung angedeutet wird im Weiteren insbesondere ein LIN-Bussystem betrachtet. Dies ist aber nicht als Einschränkung dahingehend zu verstehen, dass nicht auch andere Bussysteme mit vergleichbaren Eigenschaften erfindungsgemäß erweitert werden können. So gilt der erfindungsgemäße Gegenstand allgemein für Bussysteme mit Master-Slave-Verfahren, einem vorgebbaren, abgeschlossenen Nachrichtenrahmen und eindeutiger Zuordnung von Information zu Informationskennzeichen bzw. Teilnehmer zu Kennzeichen. Diese eindeutige Zuordnung von Information zu Informationskennzeichen kann einerseits dadurch erzielt sein, dass jede Informationsquelle, insbesondere die Slaves, ein eindeutiges Kennzeichen aufweist und jeweils nur die zugeordnete Information übermittelt oder wie bei LIN-oder CAN-Bussystemen das Identifikationskennzeichen dem Dateninhalt direkt zugeordnet ist.

Weitere Vorteile und vorteilhafte Ausgestaltungen ergeben sich aus der Beschreibung und den Merkmalen der Ansprüche.

### Zeichnung

Die Erfindung wird im Weiteren anhand der in der Zeichnung dargestellten Figuren näher erläutert.

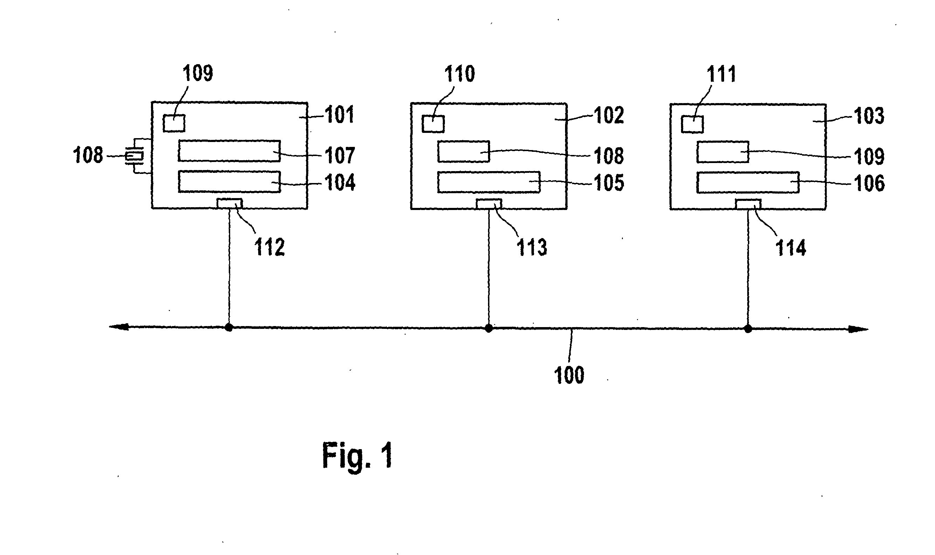

Dabei zeigt Figur 1 ein Bussystem mit zusätzlicher Informationsübertragungsmöglichkeit durch die Slaves.

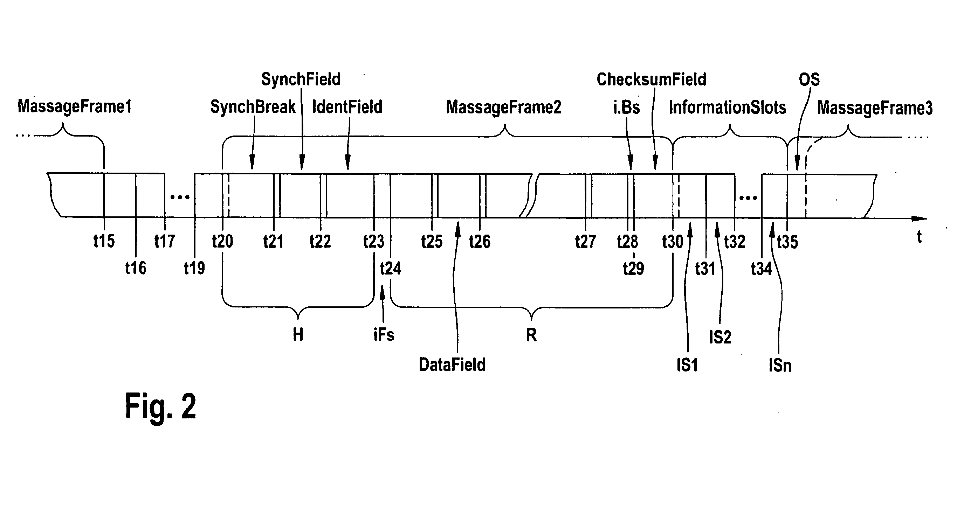

Figur 2 offenbart anhand von Nachrichtrahmen die erfindungsgemäßen Informationsabschnitte.

### Beschreibung der Ausführungsbeispiele

Figur 1 zeigt ein erfindungsgemäßes Bussystem insbesondere ein LIN-Bussystem mit Busteilnehmern 101 bis 103. Über die Busleitung oder den Bus 100 stehen diese Teilnehmer 101 bis 103 miteinander in Verbindung. Dabei ist mit Teilnehmer 101 ein übergeordneter Teilnehmer oder Master im Bussystem dargestellt. Die Teilnehmer 102 und 103 stellen untergeordnete Teilnehmer oder Slaves dar. Wie bereits im Stand der Technik erwähnt, teilt das LIN-Protokoll den Sende- und Empfangsprozeß in zwei Tasks ein. Der Mastertask oder Header H beinhaltet die Synchronisation und Adressierung durch die Felder SynchBreak, SynchField und IdentField und der Slavetask oder Response R beinhaltet die Daten oder DataField und das ChecksumField.

In Figur 1 sind die Slavetasks bzw. diese ausführenden Mittel der jeweiligen Busteilnehmer 101 bis 103 mit 104 bis 106 dargestellt. Ebenso ist die Mastertask bzw. die diese ausführenden Mittel mit Block 107 dargestellt, was nicht ausschließt, dass beispielsweise beim Master gleiche Mittel Slave- und Mastertask ausführen. Erfihdungsgemäß kommt nun bei den Slaveteilnehmern 102 und 103 eine zusätzlich sogenannte Informationtask, dargestellt durch die Blöcke 108 und 109 hinzu, durch welche diese in den die Figur 2 später noch exakt dargestellten InformationSlots oder bei Berücksichtigung einer Priorität, PrioritySlots, also den Informationsabschnitten, Informationen eintragen können.

Durch die Synchronisierung durch den Master 101 ist auch nur ein physikalischer Zeitgeber 108 im Master für das Bussystem nötig. Dieser physikalische Zeitgeber kann einem Quarz, einem VCO (Voltage Controlled Oscillator) oder Ähnlichem entsprechen. Der Zeitabgleich, die Synchronisation und Ähnliches können dann mit einer normalen klassischen Timerstruktur 109 bis 111, je nach Teilnehmer, erzielt werden. Insbesondere die Erzeugung und Auswertung der Verzögerungszeiten im Rahmen der Informationsabschnitte oder Informationslots bzw. PrioritySlots können dann mit solchen klassischen Timerstrukturen realisiert werden. Alternativ kann erfindungsgemäß die Erzeugung der Verzögerungszeit im Slave über eine erweiterte UART (Universal Asynchronous Receiver Transmitter) Schnittstelle erfolgen, die es erlaubt Informationen z. B. einen SynchBreak unter bestimmten Bedingungen verzögert zu senden. Im Master 101 kann ein entsprechend erweiterter UART die Auswertung der Zeiten ebenfalls erleichtern. So sind dann die Schnittstellenbausteine 112 bis 114 durch solche UART-Schnittstellen ausgebildet.

Figur 2 zeigt Nachrichtenrahmen (MessageFrame) und nachfolgende Informationsabschnitte (InformationSlots). D.h. abhängig von der Applikation werden nach einem Nachrichtenrahmen Informationsabschnitte eben InformationSlots oder wenn diese eine Priorität aufweisen PrioritySlots eingeführt. Jedem Slave oder einer bestimmten Slave-Sendebotschaft abhängig vom IdentitierField, also vom Informationskennzeichen kann eine Priorität beispielsweise von 1 bis 8 oder von 1 bis 16 zugeordnet werden. Dann werden die InformationSlots zu PrioritySlots.

Ein Datentransfer besteht aus einem Nachrichtenrahmen, hier MessageFrame 1, MessageFrame 2 und MessageFrame 3, wobei aus Gründen der Übersichtlichkeit MessageFrame 1 und MessageFrame 2 nur angedeutet dargestellt sind. In diesem Nachrichtenrahmen im Beispiel dargestellt in MessageFrame 2 sind Synchronisationsinformationen enthalten und zwar in der sogenannten Mastertask oder dem Header H. Hier von t20 bis t23. Zu Beginn jedes Nachrichtenrahmens, also hier der MessageFrame 2, sendet der Master das SynchBreak oder SynchBreakField von t20 bis t21, um die Slaves aus einem möglichen Ruhezustand zu holen und Synchronisation zu ermöglichen. Der SynchBreak besteht aus zwei verschieden Teile. Der erste Teil ist ein busdominantes Signal und der zweite ein busrezessives Signal. Nachfolgend wird von t21 bis t22 in SynchField ein Hilfsmuster beispielsweise ein hexadezimales Muster wie 0X55 gesendet, um dem Slave die Synchronisation zu ermöglichen, beispielsweise bei 0X55 mit Hilfe der fünf fallenden Flanken rezessiv nach dominant.

Die Synchronisation des speziellen LIN-Protokolls basiert auf Zeitmessungen. Der Master sendet im SynchField das eben erwähnte Hilfsmuster, beispielsweis 0X55 und der Slave mißt die Zeit zwischen zwei beliebigen fallenden Flanken. Jeder Abstand zwischen zwei fallenden Flanken hat genau die Länge von zwei Bits. Wird nun von der Flanke des Startbits bis zur Flanke des siebten Bits gemessen und dann das Ergebnis durch acht geteilt, kann eine exakte Zeitmessung und damit Synchronisation erfolgen.

Folgend auf das SynchField kommt das IdentField oder IdentifireField öder auch Informationskennzeichen von t22 bis t23. In diesem IdentifierField kann wie bereits in den Vorteilen angedeutet zum einen die Slave-Adresse Selbst angegeben sein oder aber ein Kennzeichen für den nachfolgenden Informationsinhalt, so dass der Nachrichteninhalt bzw. Dateninhalt durch Auswertung des IdentifierFields eindeutig feststeht. Ebenso ist im IdentitierField die Länge der Nachricht bzw. der nachfolgenden Datenfelder codiert, so dass daraus auch die Datenlänge bzw. die Länge des Nachrichtenrahmens abgeleitet werden kann. Dadurch können beispielsweise die Slaves in Gruppen mit zwei, vier oder acht Datenfelder bezüglich des von ihnen gesendeten Dateninhalts eingeteilt werden.

Nach dem Header H erfolgt die sogenannte Slavetask oder die Responce bzw. Antwort R. Zwischen Header H und Responce R kann ein kleiner zeitlicher Abstand auftreten, der sogenannte In-Frame-Responce-Space, iFs. Ebenso können zwischen den einzelnen Feldern insbesondere den Datenfeldern (DataField) Zeitabstände auftreten, die dann mit iBs (Inter-Byte-Space) bezeichnet werden. In der Responce sind von t24 bis t25, von t25 bis t26, von t27 bis t28 Datenfelder (DataFields) dargestellt. Ein solches DataField beinhaltet beispielsweise acht Informationsbits mit einem Start- und Stoppbit. Eben entsprechend 8N1-Übertragung. Abgeschlossen wird der Nachrichtenrahmen hier MessageFrame 2 mit einem ChecksumField von t29 bis t30 wobei hier der iBs (Inter-Byte-Space) von t28 bis t29 berücksichtigt wurde. Dieses vom Slave abschließend gesendete ChecksumField stellt eine Prüfsumme dar, die sich aus den zuvor gesendeten Datenfeldern ermittelt. Das ChecksumField schließt wie gesagt den Nachrichtenrahmen (hier MessageFrame 2) ab, so dass dieser sich von t20 bis t30 erstreckt.

Erfindungsgemäß wird nun eine Zeit im Anschluß an einen Nachrichtenrahmen für die InformationSlots oder Informationsabschnitte reserviert. Diese InformationSlots IS1, IS2 bis ISn von t30 bis t31, t31 bis t32 und t34 bis t35 dienen dann dazu, dass am Ende jeder Nachricht die Slaves signalisieren können, insbesondere lokale Ereignisse indem sie im entsprechenden Informationsabschnitt eine Information eintragen. Dabei werden die Informationsabschnitte IS1, IS2 bis ISn entweder eindeutig bestimmten Slaves zugeordnet oder für bestimmte Nachrichteninhalten durch das IdentifierField festgelegt, wobei wiederum durch eine eindeutige Zuordnung von Nachrichteninhalten zu bestimmten untergeordneten Teilnehmern, also Slaves, eine Informationsabschnitt-Slavezuordnung erzielt wird.

Im Weiteren wird davon ausgegangen, dass den Informationsabschnitten IS1, IS2 bis ISn entsprechend ihrer Reihenfolge Prioritäten zugeordnet werden, so dass wir im weiteren von PrioritySlot oder Prioritätsabschnitten sprechen. So können am Ende jeder Nachricht die Slaves lokale Ereignisse signalisieren, indem sie im entsprechenden PrioritySlot beispielsweise eine Synchronisationsinformation eben für den LIN-Bus einen SynchBreak senden. Der Master erkennt das SynchBreak und vervollständigt die Nachricht durch SynchField, IdentField, entsprechende Datafields und das ChecksumField. Die übrigen Slaves hören am Bus mit und erkennen nicht, ob das SynchBreak vom Master oder einem Slave gesendet wird. Hat ein Slave beginnend in einem ihm zugewiesenen PrioritySlot ein SynchBreak in die Informationslots oder den Informationsabschnitt eingetragen, werden nachfolgende Informationsabschnitte .mit niedrigerer. Priorität nicht mehr realisiert, da der Master eine Vervollständigung des Nachrichtenrahmens vornimmt. D. h. wird in IS1 mit dem Senden eines SynchBreak begonnen sind nachfolgende IS2 bis ISn wirkungslos bzw. werden durch die Vervollständigung des Nachrichtenrahmens überschrieben. Wird beispielsweise in IS2 mit dem Senden des SynchBreak begonnen und der IS1 zugeordnete Slave sendet keinen SynchBreak werden erst die Informationsabschnitte ab IS2 überschrieben. So kann der Master die Zeit bis das SynchBreak gesendet wird mitmessen und kann daran erkennen, bei welchem Slave ein Ereignis aufgetreten ist. Dieser Slave kann dann direkt abgefragt werden.

Gestrichelt angedeutet in den Informationsabschnitten ist ebenfalls hier ein iBs oder iFs der optional vorhanden sein kann oder nicht. Aus Übersichtlichkeitsgründen ist dies zwischen den anderen Informationsabschnitten nicht mehr angedeutet aber ebenso möglich. Ebenso ist nach den Informationsabschnitten mit Beginn t35 ein optionaler Freiraum OS beispielsweise Inter-Frame-Space oder eine Unterbrechnung (Break) dargestellt, wobei OS variable Länge bis zu Null haben kann. Im Idealfall schließt direkt mit t35 an den letzten InformationSlot der nächste MessageFrame 3 an, sowie dies auch beim Übergang vom MessageFrame 1 auf MessageFrame 2 mit den Informationsabschnitten von t15 bis t16, t16 bis t17 und t19 bis t20 dargestellt ist.

Wie bereits beschrieben kann die Erzeugung und Auswertung der Verzögungszeiten für die Informationsabschnitte durch die klassischen Timerstrukturen realisiert werden. Alternativ kann die Erzeugung der Verzögerungszeit im Slave über eine erweiterte UART Schnittstelle erfolgen, die es erlaubt, Informationen wie beispielsweise das SynchBreak unter bestimmten Bedingungen verzögert zu senden. Im Master kann eine entsprechend erweiterte UART die Auswertung der Zeiten ebenfalls erleichtern. Im Vergleich zum Polling des LIN-Buses können durch Einführung der Informationsabschnitte oder im speziellen der PrioritySlots lokale Ereignisse deutlich schneller erkannt werden, d. h. die Reaktionszeiten auf dem LIN-Bus werden erheblich verkürzt.

Im Allgemeinen wird der Bus in t30, also am Ende des Nachrichtenrahmens nach dem letzten Stoppbit rezessiv bleiben, beispielsweise für eine Bitperiode (in Figur 2 gestrichelt angedeutet), um dann mit dem ersten PrioritySlot zu beginnen. Solche Zeitabstände können auch zwischen den einzelnen PrioritySlots auftreten.

## Patentansprüche

1. Verfahren zur Übertragung von Informationen auf einem Bussystem (100) mit wenigstens zwei Teilnehmern (101, 102, 103), wobei genau ein übergeordneter Teilnehmer (101) und wenigstens ein untergeordneter Teilnehmer (102, 103) vorgesehen sind und die Informationen in einem vorgebbaren, abgeschlossenen Nachrichtenrahmen übertragen werden, welcher neben den zu übertragenden Informationen auch Synchronisationsinformationen enthält, wobei unterschiedlichen Informationen unterschiedliche Informationskennzeichen eindeutig zugeordnet sind, wobei nach jedem abgeschlossenen Nachrichtenrahmen eine Anzahl von Informationsabschnitten vorgesehen ist, in welchen der wenigstens eine untergeordnete Teilnehmer Informationen eintragen kann, **dadurch gekennzeichnet, dass** die Anzahl der Informationsabschnitte der Anzahl unterschiedlicher Informationskennzeichen entspricht.

2. Verfahren nach Anspruch 1, **dadurch gekennzeichnet, dass** für die Informationsabschnitte eine Reihenfolge vorgegeben ist und jedem Informationsabschnitt genau ein Informationskennzeichen zugeordnet ist.

3. Verfahren nach Anspruch 1, **dadurch gekennzeichnet, dass** die Informationskennzeichen eindeutig den Teilnehmern, insbesondere dem wenigstens einen untergeordneten Teilnehmer, zugeordnet sind.

4. Verfahren nach Anspruch 1, **dadurch gekennzeichnet, dass** der wenigstens eine untergeordnete Teilnehmer in einen, einem Informationskennzeichen des untergeordneten Teilnehmers zugeordneten Informationsabschnitt, eine Synchronisationsinformation des Bussystems eintragen kann, wodurch der übergeordnete Teilnehmer eine Übertragung eines Nachrichtenrahmens mit diesem Informationsabschnitt initiiert.

5. Verfahren nach Anspruch 1, **dadurch gekennzeichnet, dass** es sich bei dem Bussystem um ein LIN-Bussystem handelt.

6. Verfahren nach Anspruch 4 und 5, **dadurch gekennzeichnet, dass** der übergeordnete Teilnehmer im LIN-Bussystem an die durch den wenigstens einen untergeordneten Teilnehmer in wenigstens einen Informationsabschnitt als SynchBreak eingetragene Synchronisationsinformation durch SynchField, IdentField, entsprechende DataFields und ChecksumField zu einem vollständigen LIN-Nachrichtenrahmen (MessageFrame) ergänzt, wobei ebenfalls erneut nach dem abgeschlossenen LIN-Nachrichtenrahmen eine Anzahl von Informationsabschnitten vorgesehen ist.

7. Bussystem (100) zur Übertragung von Informationen mit wenigstens zwei Teilnehmern (101, 102, 103), wobei genau ein übergeordneter Teilnehmer (101) und wenigstens ein untergeordneter Teilnehmer (102, 103) vorgesehen sind und erste Mittel enthalten sind, welche die Informationen in einem vorgebbaren, abgeschlossenen Nachrichtenrahmen übertragen, welcher neben den zu übertragenden Informationen auch Synchronisationsinformationen enthält, wobei zweite Mittel enthalten sind, welche unterschiedlichen Informationen unterschiedliche Informationskennzeichen eindeutig zuordnen, wobei dritte Mittel vorgesehen sind, welche nach jedem abgeschlossenen Nachrichtenrahmen eine Anzahl von Informationsabschnitten vorsehen, in welchen der wenigstens eine untergeordnete Teilnehmer Informationen eintragen kann **dadurch gekennzeichnet, dass** die Anzahl der Informationsabschnitte der Anzahl unterschiedlicher Informationskennzeichen entspricht.

8. Bussystem nach Anspruch 8, **dadurch gekennzeichnet, dass** es sich um ein LIN-Bussystem handelt.

9. Vorrichtung zur Übertragung von Informationen in einem Bussystem (100) wobei das Bussystem wenigstens zwei Teilnehmer (101, 102, 103) aufweist, wobei genau ein übergeordneter Teiinehmer (101) und wenigstens ein untergeordneter Teilnehmer (102, 103) vorgesehen sind und in der Vorrichtung erste Mittel enthalten sind, welche die Informationen in einem vorgebbaren, abgeschlossenen Nachrichtenrahmen übertragen, welcher neben den zu übertragenden Informationen auch Synchronisationsinformationen enthält, wobei zweite Mittel enthalten sind, welche unterschiedlichen Informationen unterschiedliche Informationskennzeichen eindeutig zuordnen, wobei dritte Mittel vorgesehen sind, welche nach jedem abgeschlossenen Nachrichtenrahmen eine Anzahl von Informationsabschnitten vorsehen, in welchen der wenigstens eine untergeordnete Teilnehmer Informationen eintragen kann und **dadurch gekennzeichnet, dass** die Anzahl der Informationsabschnitte der Anzahl unterschiedlicher Informationskennzeichen entspricht.

10. Vorrichtung nach Anspruch 9, **dadurch gekennzeichnet, dass** eine Verzögerungszeit nach einem Nachrichtenrahmen für die Informationsabschnitte durch einen UART Baustein vorgegeben wird.

## Claims

1. Method for transmitting information on a bus system (100) having at least two subscribers (101, 102, 103), wherein precisely one superordinate subscriber (101) and at least one subordinate subscriber (102, 103) are provided and the information is transmitted in a prescribable, completed message frame which contains not only the information which is to be transmitted but also synchronization information, wherein different information has different information identifiers explicitly associated with it, wherein each completed message frame is followed by a number of information sections into which the at least one subordinate subscriber can enter information, **characterized in that** the number of information sections corresponds to the number of different information identifiers.

2. Method according to Claim 1, **characterized in that** an order is prescribed for the information sections and each information section has precisely one associated information identifier.

3. Method according to Claim 1, **characterized in that** the information identifiers are explicitly associated with the subscribers, particularly with the at least one subordinate subscriber.

4. Method according to Claim 1, **characterized in that** the at least one subordinate subscriber can enter an item of synchronization information from the bus system into an information section which is associated with an information identifier from the subordinate subscriber, and by virtue of this the superordinate subscriber initiates transmission of a message frame with this information section.

5. Method according to Claim 1, **characterized in that** the bus system is a LIN bus system.

6. Method according to Claims 4 and 5, **characterized in that** the superordinate subscriber in the LIN bus system adds appropriate DataFields and ChecksumField to the synchronization information, entered by the at least one subordinate subscriber into at least one information section as SynchBreak, by means of SynchField, IdentField to form an entire LIN message frame (MessageFrame), wherein a number of information sections is likewise provided again after the completed LIN message frame.

7. Bus system (100) for transmitting information having at least two subscribers (101, 102, 103), wherein precisely one superordinate subscriber (101) and at least one subordinate subscriber (102, 103) are provided and first means are contained which transmit the information in a prescribable, completed message frame which contains not only the information which is to be transmitted but also synchronization information, wherein second means are included which explicitly associate different information identifiers with different information, wherein third means are provided which follow each completed message frame with a number of information sections into which the at least one subordinate subscriber can enter information, **characterized in that** the number of information sections corresponds to the number of different information identifiers.

8. Bus system according to Claim 8, **characterized in that** it is a LIN bus system.

9. Apparatus for transmitting information in a bus system (100), wherein the bus system has at least two subscribers (101, 102, 103), wherein precisely one superordinate subscriber (101) and at least one subordinate subscriber (102, 103) are provided and the apparatus contains first means which transmit the information in a prescribable, completed message frame which contains not only the information which is to be transmitted but also synchronization information, wherein second means are included which explicitly associate different information identifiers with different information, wherein third means are provided which follow each completed message frame with a number of information sections into which the at least one subordinate subscriber can enter information, **characterized in that** the number of information sections corresponds to the number of different information identifiers.

10. Apparatus according to Claim 9, **characterized in that** a delay time after a message frame is prescribed for the information sections by a UART chip.

## Revendications

1. Procédé de transfert d'informations sur un système de bus (100) qui présente au moins deux abonnés (101, 102, 103), à savoir un abonné (101) d'ordre hiérarchique supérieur et au moins un abonné (102, 103) d'ordre hiérarchique inférieur étant prévus et les informations étant transmises dans une trame de message fermée prédéterminée qui, en plus des informations à transmettre, contient également des informations de synchronisation, des caractéristiques d'information différentes étant associées de manière univoque à différentes informations, plusieurs portions d'information dans lesquelles le ou les abonnées d'ordre hiérarchique inférieur peuvent introduire des informations étant prévues après chaque trame fermée de message,
**caractérisé en ce que**
le nombre des portions d'information correspond au nombre des caractéristiques d'information différentes.

2. Procédé selon la revendication 1, **caractérisé en ce qu'**une succession des portions d'information est prédéterminée et **en ce qu'**une caractéristique d'information est associée précisément à chaque portion d'information.

3. Procédé selon la revendication 1, **caractérisé en ce que** les caractéristiques d'information sont associées de manière univoque aux abonnés et en particulier à l'abonné ou aux abonnés d'ordre hiérarchique inférieur.

4. Procédé selon la revendication 1, **caractérisé en ce que** le ou les abonnés d'ordre hiérarchique inférieur peuvent introduire dans une portion d'information associée à une caractéristique d'information de l'abonné d'ordre hiérarchique inférieur une information de synchronisation du système de bus qui permet à l'abonné d'ordre hiérarchique supérieur de lancer la transmission d'une trame de message avec cette portion d'information.

5. Procédé selon la revendication 1, **caractérisé en ce que** le système de bus est un système de bus LIN.

6. Procédé selon les revendications 4 et 5,
**caractérisé en ce que** l'abonné d'ordre hiérarchique supérieur du système de bus LIN complète l'information de synchronisation insérée par le ou les abonnés d'ordre hiérarchique inférieur comme "SynchBreak" (rupture de synchronisation) dans au moins une portion d'information en une trame complète de message LIN ("MessageFrame" - trame de message) en ajoutant un "SynchField" (champ de synchronisation), un "IdentField" (champ d'identification), les "DataFields" (champs de données) et le "ChecksumField" (champ de somme de contrôle) correspondants, plusieurs portions d'information étant éventuellement prévues de nouveau après la trame fermée de message LIN.

7. Système de bus (100) pour la transmission d'information, comprenant au moins deux abonnés (101, 102, 103), à savoir exactement un abonné d'ordre hiérarchique supérieur (101) et au moins un abonné d'ordre hiérarchique inférieur (102, 103), le système de bus contenant des premiers moyens qui transmettent les informations dans une trame fermée prédéterminée de message qui, en plus des informations à transmettre, contient également des informations de synchronisation, le système de bus contenant des deuxièmes moyens qui associent de manière univoque des caractéristiques d'information différentes à des informations différentes, et des moyens qui, après chaque trame fermée de message, prévoient plusieurs portions d'information dans lesquelles le ou les abonnés d'ordre hiérarchique inférieur peuvent introduire des informations,
**caractérisé en ce que**
le nombre des portions d'information correspond au nombre des différentes caractéristiques d'information.

8. Système de bus selon la revendication 8, **caractérisé en ce que** c'est un système de bus LIN.

9. Dispositif de transmission d'information dans un système de bus (100), le système de bus présentant au moins deux abonnés (101, 102, 103), à savoir exactement un abonné d'ordre hiérarchique supérieur (101) et au moins un abonné d'ordre hiérarchique inférieur (102, 103), le dispositif présentant des premiers moyens qui transmettent les informations dans une trame fermée prédéterminée de message qui, en plus des informations à transmettre, contient également des informations de synchronisation, le dispositif contenant des deuxièmes moyens qui associent de manière univoque des caractéristiques d'information différentes à des informations différentes et le dispositif présentant des troisièmes moyens qui, après chaque trame fermée de message, prévoient plusieurs portions d'information dans lesquelles le ou les abonnés d'ordre hiérarchique inférieur peuvent introduire des informations,
**caractérisé en ce que**
le nombre des portions d'information correspond au nombre des caractéristiques d'information différentes.

10. Dispositif selon la revendication 9, **caractérisé en ce qu'**une durée de temporisation après une trame de message pour les portions d'information est prédéterminée par un module UART.
